# EUROPEAN PATENT APPLICATION

(11) **EP 4 835 986 A1**
(43) Date of publication of application: **04.11.2026**
(21) Application number: 24912158.3
(22) Date of filing: 26.11.2024
(51) Int. Cl.: H01M 4/139

(54) **METHOD FOR PRODUCING MOLDED BODY FOR ELECTRODES**

(30) Priority: 25.12.2023 JP 2023218611
(71) Applicant: Kyocera Corporation, Kyoto-shi, Kyoto 612-8501 (JP)
(72) Inventor: KODAMA, Taiga, ashigara-shi, Kanagawa 250-0193 (JP); IWASE, Eijiro, ashigara-shi, Kanagawa 250-0193 (JP)
(74) Representative: TBK
(86) International application number: PCT/JP2024/041831
(87) International publication number: WO 2025/142267

(57) **Abstract**

A method for manufacturing a molded body for an electrode, comprising: a step of transporting a current collector foil; a step of supplying an electrode material onto the current collector foil, the electrode material including an electrode active material, a conductive auxiliary agent, and an electrolytic solution, and having a solid content concentration of 40 vol% to 70 vol%; a step of leveling the electrode material supplied onto the current collector foil using a first film-forming member to form a first electrode material film; and a step of leveling the first electrode material film using a second film-forming member to form a second electrode material film, wherein, in a case in which a width of the first electrode material film is W1 and a width of the second electrode material film is W2, W1/W2 is more than 0.86 and less than 0.96, and in a case in which a thickness of the first electrode material film is H1 and a thickness of the second electrode material film is H2, H2/H1 is more than 0.3 and less than 0.9.

## Description

### TECHNICAL FIELD

The present disclosure relates to a method for manufacturing a molded body for an electrode.

### BACKGROUND OF INVENTION

In recent years, from a viewpoint of safety, studies have been advanced on semi-solid-state batteries in which a part of an electrolytic solution is replaced with a solid electrolyte. Manufacturing of a battery electrode using a powder comprising an electrode active material generally includes a step of applying an electrode material comprising an electrode active material and the like, which is a powder, onto a support.

For example, Japanese Patent Publication No. 2017-533548 discloses a method for manufacturing an electrochemical cell comprising a step of coating a semi-solid anode on a first surface of a negative current collector, the step comprising a step of disposing a frame defining an opening on the first surface of the negative current collector, a step of disposing the semi-solid anode into the opening of the frame, and a step of removing excess semi-solid anode material from the opening, and also discloses that the excess semi-solid anode material is removed with a vibrating doctor blade.
Japanese Patent Publication No. 2021-530829 describes a method comprising continuously dispensing a semi-solid electrode slurry onto a current collector, separating the semi-solid electrode slurry into separate portions, and cutting the current collector to form a finished electrode.

### SUMMARY

### PROBLEM TO BE SOLVED

In response to manufacturing a molded body for an electrode to be used in a semi-solid-state battery or an all-solid-state battery, a step of forming an electrode material film having a thickness corresponding to the molded body for an electrode on a current collector foil using an electrode material comprising an electrode active material is included. In this step, there were cases in which a width of the electrode material film to be formed did not match a width of the current collector foil. Specifically, there were cases in which the width of the electrode material film was too short relative to the width of the current collector foil, or cases in which the electrode material film protruded from the current collector foil.

The present disclosure is made in view of the above circumstances.
A problem to be solved by an embodiment of the present disclosure is to provide a method for manufacturing a molded body for an electrode capable of forming an electrode material film with an appropriate width relative to a width of a current collector foil.

### SOLUTION TO PROBLEM

The present disclosure includes the following aspects.
<1> A method for manufacturing a molded body for an electrode, comprising:
   a step of conveying a current collector foil;
   a step of supplying, onto the current collector foil, an electrode material comprising an electrode active material, a conductive auxiliary agent, and an electrolytic solution, and having a solid content concentration of 40 volume % to 70 volume %;
   a step of leveling the electrode material supplied onto the current collector foil using a first film-forming member to form a first electrode material film; and
   a step of leveling the first electrode material film using a second film-forming member to form a second electrode material film,
   wherein, in response to a width of the first electrode material film being W1 and a width of the second electrode material film being W2, W1/W2 is greater than 0.86 and less than 0.96, and
   in response to a thickness of the first electrode material film being H1 and a thickness of the second electrode material film being H2, H2/H1 is greater than 0.3 and less than 0.9.
<2> The method for manufacturing a molded body for an electrode according to <1>, wherein the first film-forming member is vibrating at a frequency of 10 kHz or more and less than 100 KHz.
<3> The method for manufacturing a molded body for an electrode according to <1> or <2>, wherein, in response to a width of the first film-forming member being WN1 and a width of the second film-forming member being WN2, WN1/WN2 is greater than 0.8 and less than 1.
<4> The method for manufacturing a molded body for an electrode according to any one of <1> to <3>, wherein a first regulating member configured to regulate a width of the first electrode material film is provided between the first film-forming member and the current collector foil.
<5> The method for manufacturing a molded body for an electrode according to <4>, wherein the first regulating member is not in contact with the first film-forming member and the current collector foil.
<6> The method for manufacturing a molded body for an electrode according to <4> or <5>, wherein a downstream end in a conveying direction of the current collector foil in the first film-forming member has a shorter distance to the current collector foil than an upstream end in the conveying direction of the current collector foil, and the first film-forming member is provided inclined with respect to the current collector foil.
<7> The method for manufacturing a molded body for an electrode according to <6>, wherein the first regulating member has a shape in which a height becomes lower toward the conveying direction of the current collector foil.
<8> The method for manufacturing a molded body for an electrode according to <7>, wherein a shortest distance between a lower surface of the first film-forming member and an upper surface of the first regulating member is greater than 0 mm and 0.5 mm or less.
<9> The method for manufacturing a molded body for an electrode according to <7> or <8>, wherein a shortest distance between a lower surface of the first regulating member and an upper surface of the current collector foil is greater than 0 mm and 0.5 mm or less.
<10> The method for manufacturing a molded body for an electrode according to any one of <7> to <9>, wherein a shortest distance between a downstream end in the conveying direction of the current collector foil in the first regulating member and a downstream end in the conveying direction of the current collector foil in the first film-forming member is greater than 0 mm and 5 mm or less.
<11> The method for manufacturing a molded body for an electrode according to any one of <1> to <10>, further comprising a step of leveling the second electrode material film using a third film-forming member to form a third electrode material film.
<12> The method for manufacturing a molded body for an electrode according to any one of <1> to <11>, wherein a second regulating member configured to regulate a width of the second electrode material film is provided between the second film-forming member and the current collector foil.
<13> The method for manufacturing a molded body for an electrode according to any one of <1> to <12>, comprising a step of sequentially leveling the electrode material supplied onto the current collector foil using N (where N is 2 or more) film-forming members to form an electrode material film,
   wherein, in response to a vibration frequency of an (N-1)th film-forming member being Hz N-1 and a vibration frequency of an Nth film-forming member being Hz N, Hz N/Hz N-1 is 0.001 to 0.1.
<14> The method for manufacturing a molded body for an electrode according to any one of <1> to <13>, comprising a step of sequentially leveling the electrode material supplied onto the current collector foil using N (where N is 2 or more) film-forming members to form an electrode material film,
   wherein, in response to a vibration amplitude of an (N-1)th film-forming member being Wh N-1 and a vibration amplitude of an Nth film-forming member being Wh N, Wh N/Wh N-1 is 0.005 to 0.5.

### ADVANTAGEOUS EFFECT

According to an embodiment of the present disclosure, a method for manufacturing a molded body for an electrode capable of forming an electrode material film with an appropriate width relative to a width of a current collector foil is provided.

### BRIEF DESCRIPTION OF THE DRAWINGS

[FIG. 1] FIG. 1 is a schematic side view showing an example of a manufacturing process of a molded body for an electrode.
[FIG. 2] FIG. 2 is a schematic plan view showing an example of a manufacturing process of a molded body for an electrode.

### DESCRIPTION OF EMBODIMENTS

Hereinafter, a method for manufacturing a molded body for an electrode according to the present disclosure will be described. However, the present disclosure is not limited to the following embodiments, and can be implemented with appropriate modifications within a scope of an object of the present disclosure.

In response to describing embodiments of the present disclosure with reference to drawings, description of overlapping components and reference signs may be omitted. Components indicated using the same reference signs in the drawings mean the same components. Dimensional ratios in the drawings do not necessarily represent actual dimensional ratios.

In the present disclosure, a numerical range expressed using "to" means a range including numerical values described before and after "to" as a lower limit value and an upper limit value. In numerical ranges described stepwise in the present disclosure, an upper limit value described in a certain numerical range may be replaced with an upper limit value of another stepwise numerical range, and a lower limit value described in a certain numerical range may be replaced with a lower limit value of another stepwise numerical range. In numerical ranges described stepwise in the present disclosure, an upper limit value or a lower limit value described in a certain numerical range may be replaced with a value shown in examples.

In the present disclosure, a combination of a plurality of preferred aspects is a more preferred aspect.
Furthermore, in the present specification, an amount of each component in a composition means, in response to a plurality of substances corresponding to each component existing in the composition, unless otherwise specified, a total amount of the plurality of corresponding substances existing in the composition.

In the present specification, the term "step" includes not only an independent step but also a step in response to an intended purpose of the step being achieved even in response to the step not being clearly distinguishable from other steps.

In the present specification, "mass %" and "weight %" are synonymous, and "mass part" and "weight part" are synonymous.
Also, "total solid content" refers to a total mass of components excluding a solvent from an entire composition of a composition. "Solid content" may be a solid or a liquid at 25°C.

### [Method for Manufacturing Molded Body for Electrode]

A method for manufacturing a molded body for an electrode according to the present disclosure comprises a step of conveying a current collector foil, a step of supplying, onto the current collector foil, an electrode material comprising an electrode active material, a conductive auxiliary agent, and an electrolytic solution, and having a solid content concentration of 40 volume % to 70 volume %, a step of leveling the electrode material supplied onto the current collector foil using a first film-forming member to form a first electrode material film, and a step of leveling the first electrode material film using a second film-forming member to form a second electrode material film.

In response to a width of the first electrode material film being W1 and a width of the second electrode material film being W2, W1/W2 is greater than 0.8 and less than 1.

In response to a thickness of the first electrode material film being H1 and a thickness of the second electrode material film being H2, H2/H1 is greater than 0.3 and less than 0.9.

Conventionally, in response to manufacturing a molded body for an electrode using an electrode material having a high solid content concentration (solid content concentration of 40 volume % to 70 volume %), there were cases in which only a thickness of an end portion in a width direction of an electrode material film to be formed became thicker compared to other portions.

This is considered to be because, in response to supplying and forming a film of the electrode material, pressure applied to a central portion in the width direction is relatively high, pressure applied to end portions in the width direction is relatively low, and fluidized electrode material tends to gather at the end portions in the width direction.

In response to only the thickness of the end portions in the width direction of the electrode material film becoming thicker, electric field concentration tends to occur in response to electrodes being stacked.

In contrast, the present inventors have found a method of supplying the electrode material so as to be narrower than a desired width and thicker than a desired thickness, and then gradually crushing and spreading the formed electrode material film, and supplying while gradually adjusting the width and thickness. Specifically, a method for manufacturing a molded body for an electrode according to the present disclosure includes at least two steps of leveling the electrode material. And, W1/W2 is greater than 0.86 and less than 0.96, and H2/H1 is greater than 0.3 and less than 0.9. By forming an electrode material film under such conditions, a molded body for an electrode excellent in uniformity of thickness of end portions in a width direction can be obtained.

Japanese Patent Publication No. 2017-533548 and Japanese Patent Publication No. 2021-530829 do not describe a method of forming a film stepwise using a first film-forming member and a second film-forming member.

A method for manufacturing a molded body for an electrode according to the present disclosure will be described below with reference to drawings.

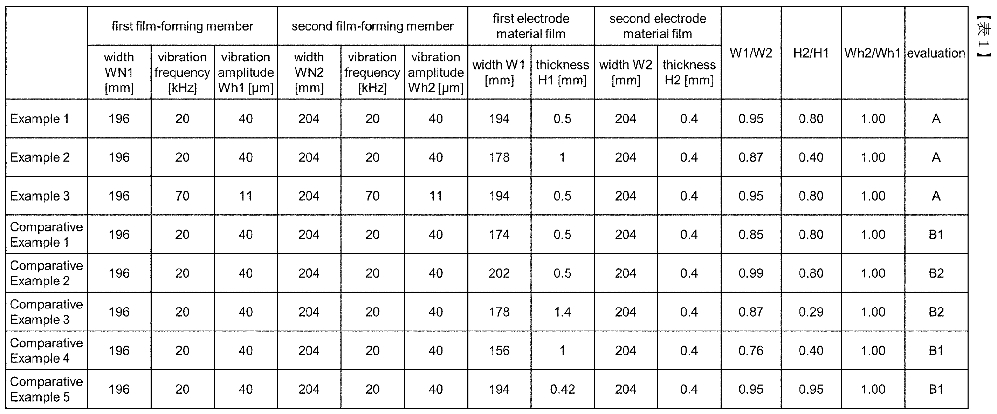

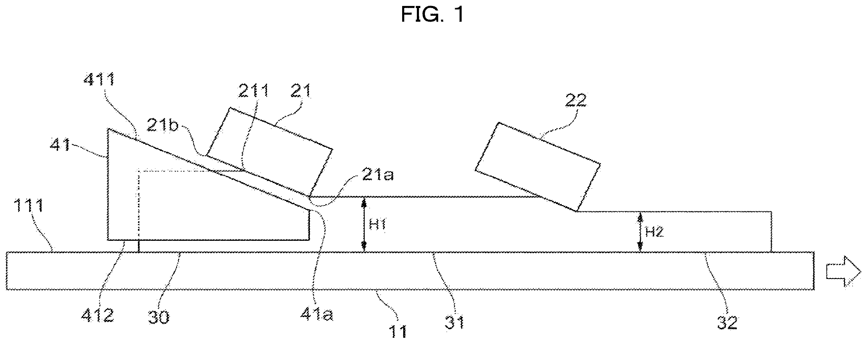

FIG. 1 is a schematic side view showing a manufacturing process of a molded body for an electrode.

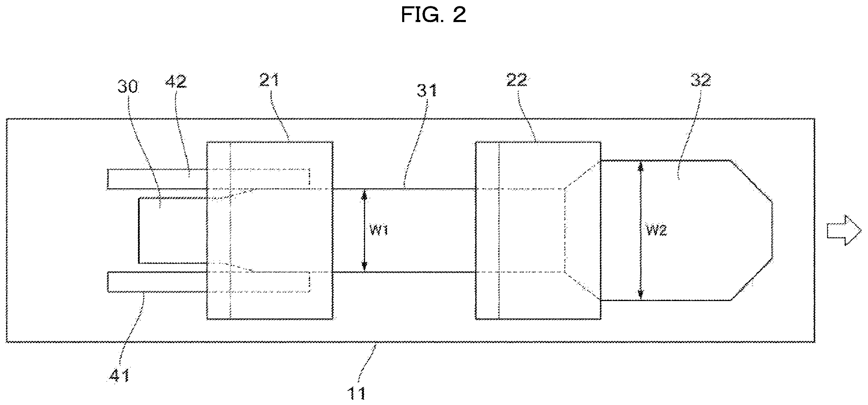

FIG. 2 is a schematic plan view showing a manufacturing process of a molded body for an electrode.

### <Step of Conveying Current Collector Foil>

In a method for manufacturing a molded body for an electrode according to the present disclosure, a current collector foil is conveyed. A current collector foil 11 is, for example, disposed on a moving stage (not shown) provided in a manufacturing apparatus. By moving the moving stage in a conveying direction indicated by an arrow in FIG. 1, the current collector foil 11 is conveyed in the conveying direction.

A conveying speed of the current collector foil is not particularly limited, and is, for example, 1 m/min to 20 m/min.

### (Current Collector Foil)

An average thickness of the current collector foil is preferably 3 µm or more, more preferably 5 µm or more, and particularly preferably 10 µm or more from a viewpoint of transportability and the like.

The average thickness is preferably 100 µm or less, more preferably 70 µm or less, and particularly preferably 50 µm or less from viewpoints of flexibility and lightness.

An average thickness of the current collector foil is an arithmetic average of thicknesses at three locations measured by cross-sectional observation. In cross-sectional observation, a known microscope (for example, a scanning electron microscope) can be used.

A size of the current collector foil is not particularly limited, and is preferably elongated from a viewpoint of continuously forming an electrode material film.

The current collector foil includes a current collector foil to be used for a positive electrode current collector or a negative electrode current collector.

Examples of the positive electrode current collector include aluminum, an aluminum alloy, stainless steel, nickel, and titanium. The positive electrode current collector is preferably aluminum or an aluminum alloy. The positive electrode current collector may be aluminum having a coating layer comprising one or more of carbon, nickel, titanium, silver, gold, platinum, and vanadium oxide on a surface.

Examples of the negative electrode current collector include aluminum, copper, a copper alloy, stainless steel, nickel, and titanium. The negative electrode current collector is preferably aluminum, copper, a copper alloy, or stainless steel, and more preferably copper or a copper alloy. The negative electrode current collector may be copper or stainless steel having a coating layer comprising one or more of carbon, nickel, titanium, silver, and lithium on a surface.

The current collector foil is preferably an aluminum foil (including an aluminum foil having the above-described coating layer on a surface) or a copper foil (including a copper foil having the above-described coating layer on a surface). An aluminum foil is usually used as a positive electrode current collector. A copper foil is usually used as a negative electrode current collector.

Also, a resin film may be provided on the current collector foil as a support.

Examples of the support include a resin film. Examples of the resin film include a polyethylene terephthalate (PET) film, a polypropylene (PP) film, a polyethylene (PE) film, a cyclic olefin polymer (COP, COC) film, a triacetyl cellulose (TAC) film, a polyimide (PI) film, and a polyamide (PA) film.

Also, a release material can be mentioned as an example of the support. Examples of the release material include release paper (for example, release paper manufactured by Lintec Corporation), a film having a release layer, and paper having a release layer, and among these, release paper is preferable.

### <Step of Supplying Electrode Material onto Current Collector Foil>

A method for manufacturing a molded body for an electrode according to the present disclosure includes a step of supplying, onto a current collector foil, an electrode material comprising an electrode active material, a conductive auxiliary agent, and an electrolytic solution, and having a solid content concentration of 40 volume % to 70 volume %.

A method of supplying the electrode material onto the current collector foil is not particularly limited. For example, the electrode material is supplied continuously or intermittently from a tank storing the electrode material to an upstream side in a conveying direction of the current collector foil.

A supply amount of the electrode material to the current collector foil can be appropriately selected according to a size, a thickness, and the like of an electrode material film to be manufactured.

### (Electrode Material)

The electrode material comprises at least an electrode active material, a conductive auxiliary agent, and an electrolytic solution, and may comprise other components as necessary.

### - Electrode Active Material -

An electrode active material is a substance capable of inserting and releasing ions of a metal element belonging to Group 1 or Group 2 in a periodic table. The electrode active material is included in a solid component.

Examples of the electrode active material include a positive electrode active material and a negative electrode active material.

The positive electrode active material is not limited, and a known electrode active material to be used for a positive electrode can be used. The positive electrode active material is preferably a positive electrode active material capable of reversibly inserting and releasing lithium ions.

Specific examples of the positive electrode active material include a transition metal oxide and an element capable of being composited with lithium (for example, sulfur). Among the above, the positive electrode active material is preferably a transition metal oxide.

The transition metal oxide is preferably a transition metal oxide comprising at least one transition metal element selected from a group consisting of Co (cobalt), Ni (nickel), Fe (iron), Mn (manganese), Cu (copper), and V (vanadium) (hereinafter referred to as "element Ma").

In response to the transition metal oxide comprising Li and element Ma, a molar ratio of Li to Ma (Li/Ma) is preferably 0.3 to 2.2.

Also, the transition metal oxide may comprise at least one transition metal element selected from a group consisting of a Group 1 element other than lithium, a Group 2 element, Al (aluminum), Ga (gallium), In (indium), Ge (germanium), Sn (tin), Pb (lead), Sb (antimony), Bi (bismuth), Si (silicon), P (phosphorus), and B (boron) (hereinafter referred to as "element Mb"). A content of element Mb is preferably 0 mol % to 30 mol % with respect to a substance amount of element Ma.

Examples of the transition metal oxide include a transition metal oxide having a layered rock salt structure, a transition metal oxide having a spinel structure, a lithium-containing transition metal phosphate compound, a lithium-containing transition metal halogenated phosphate compound, and a lithium-containing transition metal silicate compound.

Examples of the transition metal oxide having a layered rock salt structure include LiCoO₂ (lithium cobaltate [LCO]), LiNi₂O₂ (lithium nickelate), LiNi₀.₈₅Co₀.₁₀Al₀.₀₅O₂ (lithium nickel cobalt aluminate [NCA]), LiNi₁/₃Co₁/₃Mn₁/₃O₂ (lithium nickel manganese cobaltate [NMC]), and LiNi₀.₅Mn₀.₅O₂ (lithium manganese nickelate).

Examples of the transition metal oxide having a spinel structure include LiCoMnO₄, Li₂FeMn₃O₈, Li₂CuMn₃O₈, Li₂CrMn₃O₈, and Li₂NiMn₃O₈.

Examples of the lithium-containing transition metal phosphate compound include olivine-type iron phosphate salts (for example, LiFePO₄ and Li₃Fe₂(PO₄)₃), iron pyrophosphate salts (for example, LiFeP₂O₇), cobalt phosphate salts (for example, LiCoPO₄), and monoclinic nasicon-type vanadium phosphate salts (for example, Li₃V₂(PO₄)₃ (lithium vanadium phosphate)).

Examples of the lithium-containing transition metal halogenated phosphate compound include iron fluorophosphate salts (for example, Li₂FePO₄F), manganese fluorophosphate salts (for example, Li₂MnPO₄F), and cobalt fluorophosphate salts (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a layered rock salt structure, and more preferably at least one compound selected from a group consisting of LiCoO₂ (lithium cobaltate [LCO]), LiNi₀.₈₅Co₀.₁₀Al₀.₀₅O₂ (lithium nickel cobalt aluminate [NCA]), and LiNi₁/₃Co₁/₃Mn₁/₃O₂ (lithium nickel manganese cobaltate [NMC]).

The positive electrode active material may be a commercially available product or a synthetic product manufactured by a known method (for example, a firing method). For example, a positive electrode active material obtained by a firing method may be washed using water, an acidic aqueous solution, an alkaline aqueous solution, or an organic solvent. Also, the positive electrode active material may have a carbon coating on a surface thereof.

A shape of the positive electrode active material is not limited, but is preferably particulate from a viewpoint of handleability.

A volume average particle diameter of the positive electrode active material is not limited, and can be, for example, 0.1 µm to 50 µm. The volume average particle diameter of the positive electrode active material is preferably 0.3 µm to 40 µm, and more preferably 0.5 µm to 30 µm.

In response to the volume average particle diameter of the positive electrode active material being 0.3 µm or more, scattering of the positive electrode active material during handling can be suppressed. In response to the volume average particle diameter of the positive electrode active material being 40 µm or less, a thickness of an electrode layer can be easily adjusted, and generation of voids in a molding process can be suppressed.

A volume average particle diameter of the positive electrode active material is measured by the following method.

A dispersion liquid comprising 0.1 mass % or less of a positive electrode active material is prepared by mixing the positive electrode active material and a solvent (for example, pure water, ethanol, heptane, octane, toluene, or xylene). A dispersion liquid irradiated with ultrasonic waves of 1 kHz for 10 minutes is used as a measurement sample. Using a laser diffraction/scattering particle size distribution measuring apparatus (for example, LA-960 manufactured by Horiba, Ltd.), data is acquired 50 times under a condition of a temperature of 25°C, and a volume average particle diameter is obtained from a volume frequency particle size distribution. A quartz cell is used as a cell for measurement. The above measurement is performed using five samples, and an average of measured values is used as a volume average particle diameter of the positive electrode active material. For other detailed conditions, "JIS Z 8828:2013" is referred to as necessary.

Examples of a method of adjusting a particle diameter of the positive electrode active material include a method using a pulverizer, a crusher, or a classifier. Also, as a method of adjusting a particle diameter of the positive electrode active material, a known milling method may be applied.

The positive electrode active material may be used singly or in combination of two or more.

Also, even in response to using one type of positive electrode active material, positive electrode active materials having different particle diameters may be used in combination.

A content of the positive electrode active material with respect to a total volume of the electrode material is preferably 30 volume % to 60 volume %, more preferably 35 volume % to 55 volume %, and still more preferably 40 volume % to 50 volume %.

The negative electrode active material is not limited, and a known negative electrode active material to be used for a negative electrode can be used. The negative electrode active material is preferably a negative electrode active material capable of reversibly inserting and releasing lithium ions.

Examples of the negative electrode active material include a carbonaceous material, a metal oxide (for example, tin oxide), silicon oxide, a metal composite oxide, lithium alone, a lithium alloy (for example, a lithium aluminum alloy), and a metal capable of forming an alloy with lithium (for example, Sn, Si, and In). Among the above, the negative electrode active material is preferably a carbonaceous material or a lithium composite oxide from a viewpoint of reliability.

A carbonaceous material is a material substantially consisting of carbon.

Examples of the carbonaceous material include petroleum pitch, carbon black (for example, acetylene black), graphite (for example, natural graphite and artificial graphite (for example, vapor-grown graphite)), hard carbon, and a carbonaceous material obtained by firing a synthetic resin (for example, polyacrylonitrile (PAN) and furfuryl alcohol resin). Examples of the carbonaceous material also include carbon fibers (for example, polyacrylonitrile-based carbon fiber, cellulose-based carbon fiber, pitch-based carbon fiber, vapor-grown carbon fiber, dehydrated PVA (polyvinyl alcohol)-based carbon fiber, lignin carbon fiber, glassy carbon fiber, and activated carbon fiber). Examples of graphite also include mesophase microspheres, graphite whiskers, and flat graphite.

In the present disclosure, "flat" means a shape having two main planes facing in opposite directions.

The metal composite oxide is preferably a metal composite oxide capable of occluding and releasing lithium.

A metal composite oxide capable of occluding and releasing lithium preferably comprises at least one element selected from a group consisting of titanium and lithium from a viewpoint of high current density charge/discharge characteristics.

The metal oxide and the metal composite oxide are particularly preferably an amorphous oxide.

The metal oxide and the metal composite oxide are also preferably a chalcogenide. A chalcogenide is a reaction product of a metal element and an element of Group 16 in a periodic table.

Among a group of compounds consisting of an amorphous oxide and a chalcogenide, an amorphous oxide of a semimetal element and a chalcogenide are preferable, and an oxide comprising at least one element selected from a group consisting of elements of Groups 13 to 15 in a periodic table, Al, Ga, Si, Sn, Ge, Pb, Sb, and Bi, and a chalcogenide are more preferable.

The negative electrode active material also preferably further comprises titanium. From a viewpoint that excellent rapid charge/discharge characteristics are obtained because volume fluctuation during occlusion and release of lithium ions is small, and life of a lithium ion secondary battery can be improved by suppressing deterioration of an electrode, a negative electrode active material comprising titanium is preferably Li₄Ti₅O₁₂ (lithium titanate [LTO]).

The negative electrode active material may be a commercially available product or a synthetic product manufactured by a known method (for example, a firing method). For example, a negative electrode active material obtained by a firing method may be washed using water, an acidic aqueous solution, an alkaline aqueous solution, or an organic solvent.

The negative electrode active material is available, for example, as CGB20 (Nippon Graphite Industries, Ltd.).

A composition of the negative electrode active material is measured using inductively coupled plasma (ICP) emission spectroscopy.

A shape of the negative electrode active material is not limited, but is preferably particulate from a viewpoint of being easy to handle and easy to manage uniformity during mass production.

A volume average particle diameter of the negative electrode active material is preferably 0.1 µm to 60 µm, more preferably 0.3 µm to 50 µm, and particularly preferably 0.5 µm to 40 µm.
A volume average particle diameter of the negative electrode active material is measured by a method according to a method of measuring a volume average particle diameter of the positive electrode active material.

Examples of a method of adjusting a particle diameter of the negative electrode active material include a method using a pulverizer or a classifier.

The negative electrode active material may be used singly or in combination of two or more.

Also, even in response to using one type of negative electrode active material, negative electrode active materials having different particle diameters may be used in combination.

A content of the negative electrode active material with respect to a total volume of the electrode material is preferably 30 volume % to 60 volume %, more preferably 35 volume % to 57 volume %, and still more preferably 45 volume % to 55 volume %.

Surfaces of the positive electrode active material and the negative electrode active material may each be coated with a surface coating agent. Examples of the surface coating agent include a metal oxide comprising Ti, Nb, Ta, W, Zr, Si, or Li. Examples of the metal oxide include titanate spinel, a tantalum-based oxide, a niobium-based oxide, and a lithium niobate-based compound.

### - Conductive Auxiliary Agent -

The electrode material comprises a conductive auxiliary agent from a viewpoint of improving electronic conductivity of the electrode active material. The conductive auxiliary agent is not limited, and a known conductive auxiliary agent can be used.

The conductive auxiliary agent is included in a solid component.

Examples of the conductive auxiliary agent include graphite (for example, natural graphite and artificial graphite), carbon black (for example, acetylene black, ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and conductive polymer (for example, polyaniline, polypyrrole, polythiophene, polyacetylene, and polyphenylene derivative).

The conductive auxiliary agent may be used singly or in combination of two or more.

A content of the conductive auxiliary agent with respect to a total volume of the electrode material is preferably 0.05 volume % to 5 volume %, more preferably 0.1 volume % to 4 volume %, and still more preferably 0.5 volume % to 3 volume %.

In a method for manufacturing an electrode layer according to the present disclosure, a usage amount of the conductive auxiliary agent is preferably determined so that a content in the electrode layer is in the above-described range.

### - Electrolytic Solution -

The electrode material comprises an electrolytic solution. The electrolytic solution is not particularly limited, and a known electrolytic solution can be used. Examples of the electrolytic solution include an electrolytic solution comprising an electrolyte and a solvent. Specific examples of the electrolytic solution include an electrolytic solution comprising a lithium salt compound as an electrolyte and a carbonate compound as a solvent.

Examples of the lithium salt compound include lithium hexafluorophosphate. The electrolytic solution may comprise one type of lithium salt compound singly, or may comprise two or more types of lithium salt compounds.

Examples of the carbonate compound include chain carbonate compounds such as ethyl methyl carbonate (also referred to as EMC), dimethyl carbonate (also referred to as DMC), and diethyl carbonate (DEC), and cyclic carbonate compounds such as ethylene carbonate (also referred to as EC) and propylene carbonate (also referred to as PC). The electrolytic solution may comprise one type of carbonate compound singly, may comprise two or more types of carbonate compounds, or may use one or more types of chain carbonate compounds and one or more types of cyclic carbonate compounds in combination.

As an electrolyte to be included in the electrolytic solution, for example, a known inorganic solid electrolyte can also be used.

As a component of the electrolytic solution, for example, an ionic liquid may be used. An ionic liquid may be used as an electrolyte or as a solvent.

A content of the electrolytic solution with respect to a total volume of the electrode material is preferably 70 volume % or less, may be 50 volume % or less, or may be 40 volume % or less. A lower limit of a content of the electrolytic solution with respect to a total volume of the electrode material is not limited, may be 20 volume % or more, or may be 30 volume % or more.

A content of the electrolytic solution with respect to a total volume of the electrode material is, for example, preferably 30 volume % to 50 volume %.

### - Solvent -

The electrode material may comprise, as a liquid component, a solvent other than a solvent included as a component of the electrolytic solution (hereinafter also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent is preferably 50°C or higher, and more preferably 70°C or higher at normal pressure (that is, 1 atm). An upper limit of a boiling point of the solvent is preferably 250°C or lower, and more preferably 220°C or lower at normal pressure (that is, 1 atm).

### The solvent may be used singly or in combination of two or more.

A content of a liquid component (that is, an electrolytic solution and a solvent) with respect to a total volume of the electrode material is preferably 70 volume % or less, may be 50 volume % or less, or may be 40 volume % or less. A lower limit of a content of a liquid component with respect to a total volume of the electrode material is not limited, may be 20 volume % or more, or may be 30 volume % or more.

A content of a liquid component with respect to a total volume of the electrode material is preferably 30 volume % to 50 volume %.

Note that a liquid component included in the electrode material, that is, a component that is liquid at 25°C in the electrode layer, is preferably liquid even at -10°C, and is preferably liquid even at -20°C. That is, a component that is liquid at 25°C in the electrode layer is preferably a component that does not solidify at -10°C, and is preferably a component that does not solidify even at -20°C.

### - Other Components -

The electrode material may comprise, in addition to the above components, an inorganic solid electrolyte, a binder, a dispersant, other additives, and the like.

The electrode material preferably has a lower content of a binder (also referred to as a resin component) from a viewpoint of improving energy density, is preferably 1 mass % or less, and particularly preferably does not comprise (0 mass %).

The binder includes, in addition to a resin component, components called a rheology adjusting agent and a dispersant, and examples thereof include a fluorine-containing resin, a hydrocarbon-based thermoplastic resin, an acrylic resin, and a urethane resin.

Examples of the dispersant include a known dispersant capable of dispersing an object to be dispersed.

As other additives, known additives to be added to an electrode can be used.

The electrode material can be prepared, for example, by mixing an electrode active material, a conductive auxiliary agent, and an electrolytic solution, and, as necessary, an inorganic solid electrolyte and other components. Examples of a mixing method include a method using a ball mill, a bead mill, a planetary mixer, a blade mixer, a roll mill, a kneader, or a disk mill.

The electrode material has a solid content concentration of 40 volume % to 70 volume %.

A solid content concentration means a content of a solid component with respect to a total volume of the electrode material.

The solid content concentration is preferably 46 volume % to 63 volume % from a viewpoint of battery performance.

The solid content concentration is calculated from a composition ratio of each component included in the electrode material and a specific gravity of those components.

### <Step of Forming First Electrode Material Film and Second Electrode Material Film>

A method for manufacturing a molded body for an electrode according to the present disclosure comprises a step of leveling an electrode material supplied onto a current collector foil using a first film-forming member to form a first electrode material film, and a step of leveling the first electrode material film using a second film-forming member to form a second electrode material film.

As shown in FIGS. 1 and 2, a first film-forming member 21 and a second film-forming member 22 are provided on a current collector foil 11 in order from an upstream side in a conveying direction of the current collector foil toward a downstream side in the conveying direction.

The current collector foil 11 moves in an arrow direction, and an electrode material 30 supplied onto the current collector foil 11 passes through the first film-forming member 21 and is formed into a layer, and a first electrode material film 31 is formed. Also, in response to the first electrode material film 31 passing through the second film-forming member 22, a thickness and a width of the first electrode material film 31 are adjusted, and a second electrode material film 32 is formed.

Specifically, in response to a width of the first electrode material film 31 being W1 and a width of the second electrode material film 32 being W2, W1/W2 is greater than 0.86 and less than 0.96, and in response to a thickness of the first electrode material film 31 being H1 and a thickness of the second electrode material film 32 being H2, H2/H1 is greater than 0.3 and less than 0.9.

W1/W2 is preferably 0.89 or more and less than 0.96, and more preferably 0.92 or more and less than 0.96.

H2/H1 is preferably 0.5 or more and less than 0.9, and more preferably 0.7 or more and less than 0.9.

Widths of the first electrode material film 31 and the second electrode material film 32 are measured using an image captured from an upper surface of an electrode.

Thicknesses of the first electrode material film 31 and the second electrode material film 32 are measured using a non-contact displacement meter, for example, a laser displacement meter.

By leveling the electrode material 30 stepwise and adjusting a thickness and a width of an electrode material film, a molded body for an electrode excellent in uniformity of thickness of end portions in a width direction of an electrode material film to be finally formed can be obtained.

### - First Film-Forming Member and Second Film-Forming Member -

The first film-forming member 21 and the second film-forming member 22 are not particularly limited as long as they are members capable of leveling an electrode material, and examples thereof include regulating members such as a blade and a roller.

A blade is a plate-shaped member having a flat surface. A shape, a size, a material, and the like of a contact portion that contacts an electrode material may be appropriately selected according to a type of the electrode material (a type of an electrode active material, a solid content concentration, a composition of an electrolytic solution (viscosity, surface tension), and the like), a size, a thickness, and the like of an electrode material film to be aimed.

A contact portion of a blade with an electrode material preferably has difficulty in adhering the electrode material, and for example, at least a contact portion of a blade preferably exhibits releasability. Examples of the blade include a blade made of a resin (a fluorine-based resin such as polytetrafluoroethylene (PTFE), polyetheretherketone (PEEK), and the like), a blade made of a metal (stainless steel, aluminum, iron, a cemented carbide, and the like), or a blade made of ceramic. Also, from a viewpoint of imparting releasability to a surface of a contact portion of a blade, the blade may have a surface layer exhibiting releasability (for example, a surface layer comprising a fluorine-based resin, a surface layer comprising silicon-based particles and a resin). Furthermore, from a viewpoint of enhancing wear resistance of a blade, a blade body made of metal or ceramic may have a high-hardness coating such as titanium oxide, titanium nitride (TiN), or tungsten carbide.

In response to leveling the electrode material 30, the first film-forming member 21 is preferably vibrating at a frequency of 10 kHz or more and less than 100 KHz.

A vibration direction of the first film-forming member 21 is not particularly limited. A vibration amplitude of the first film-forming member 21 is preferably 1 µm to 100 µm.

Vibration can be applied, for example, by a vibrator. In response to vibration propagating to an electrode material and shearing force being applied, at least at a contact portion of the electrode material 30 with the first film-forming member 21, a decrease in viscosity, an improvement in fluidity, and the like can be caused. As a result, a surface state of the first electrode material film 31 to be formed is adjusted, and a first electrode material film 31 with little thickness variation can be obtained.

Similarly, in response to leveling the first electrode material film 31, the second film-forming member 22 is also preferably vibrating. From a viewpoint of improving uniformity of thickness of end portions in a width direction of an electrode material film to be finally formed, a vibration frequency of the second film-forming member 22 is preferably smaller than a vibration frequency of the first film-forming member 21. Specifically, a ratio of a vibration frequency of the second film-forming member 22 to a vibration frequency of the first film-forming member 21 is preferably 0.001 to 0.1.

Also, from a viewpoint of improving uniformity of thickness of end portions in a width direction of an electrode material film to be finally formed, a vibration amplitude of the second film-forming member 22 is preferably smaller than a vibration amplitude of the first film-forming member 21. Specifically, a ratio of a vibration amplitude of the second film-forming member 22 to a vibration amplitude of the first film-forming member 21 is preferably 0.005 to 0.5.

In a method for manufacturing a molded body for an electrode according to the present disclosure, an electrode material film may be formed using two or more film-forming members.

That is, a method for manufacturing a molded body for an electrode according to the present disclosure may further comprise a step of leveling the second electrode material film 32 using a third film-forming member to form a third electrode material film.

By gradually leveling an electrode material using three or more film-forming members, uniformity of thickness of end portions in a width direction of an electrode material film to be finally formed can be improved.

That is, a step of sequentially leveling an electrode material supplied onto a current collector foil using N (where N is 2 or more) film-forming members to form an electrode material film may be included. In response to a vibration frequency of an (N-1)th film-forming member being Hz N-1 and a vibration frequency of an Nth film-forming member being Hz N, Hz N/Hz N-1 is preferably 0.001 to 0.1. Also, in response to a vibration amplitude of an (N-1)th film-forming member being Wh N-1 and a vibration amplitude of an Nth film-forming member being Wh N, Wh N/Wh N-1 is preferably 0.005 to 0.5.

That is, in a method for manufacturing a molded body for an electrode according to the present disclosure, by reducing a vibration frequency of a film-forming member and a vibration amplitude of a film-forming member in a final stage of forming an electrode material film, uniformity of thickness of end portions in a width direction of an electrode material film to be finally formed can be improved.

In order to make W1/W2 0.7 or more and less than 1, in response to a width of the first film-forming member 21 being WN1 and a width of the second film-forming member 22 being WN2, WN1/WN2 is preferably 0.7 or more and less than 1. A width here means a length in a direction perpendicular to a conveying direction of a current collector foil.

A downstream end 21a in a conveying direction of the current collector foil 11 in the first film-forming member 21 preferably has a shorter distance to the current collector foil 11 than an upstream end 21b in the conveying direction of the current collector foil 11, and the first film-forming member 21 is preferably provided inclined with respect to the current collector foil 11.

A distance here means a shortest distance between a downstream end 21a or an upstream end 21b and an upper surface of the current collector foil 11.

In response to the first film-forming member 21 being provided inclined with respect to the current collector foil 11, a supply amount of the electrode material 30 is adjusted, and a more uniform first electrode material film can be formed.

### - First Regulating Member -

Also, as shown in FIGS. 1 and 2, a first regulating member 41, 42 configured to regulate a width of the first electrode material film 31 is preferably provided between the first film-forming member 21 and the current collector foil 11.

The first regulating members 41, 42 are preferably provided spaced apart from each other in a width direction of the current collector foil. In response to the electrode material 30 being supplied between the first regulating members 41, 42, a width of the first electrode material film 31 is controlled. As a result, uniformity of thickness of end portions in a width direction of an electrode material film to be finally formed is improved.

Note that, similarly to the first regulating members 41, 42, a second regulating member (not shown) configured to regulate a width of the second electrode material film 32 may also be provided between the second film-forming member 22 and the current collector foil 11.

As shown in FIGS. 1 and 2, the first regulating members 41, 42 are preferably not in contact with the first film-forming member 21 and the current collector foil 11. In response to the first regulating members 41, 42 being provided independently without contacting the first film-forming member 21 and the current collector foil 11, the first regulating member itself does not propagate vibration, and flow of an electrode material on a surface thereof can be suppressed. Also, in response to the first regulating member not being in contact with the current collector foil, occurrence of defects such as wrinkles and scratches on the current collector foil can be suppressed.

Also, the first regulating members 41, 42 are preferably located on an upstream side in a conveying direction of the current collector foil relative to the first film-forming member 21. As a result, before the electrode material 30 is leveled by the first film-forming member 21, a contact amount of the electrode material 30 to the first film-forming member 21 can be adjusted.

A shape of the first regulating members 41, 42 is not particularly limited, but preferably has a shape in which a height becomes lower toward a conveying direction of the current collector foil 11. With such a shape, it is possible to suppress the electrode material from entering a gap between the first regulating member and a film-forming member or a current collector foil, thereby preventing the end shape of the electrode from becoming unstable..

A shape in which a height becomes lower toward a conveying direction of the current collector foil 11 may be a shape in which a height becomes lower stepwise, or may be a shape in which a height becomes lower continuously.

A shape of the first regulating members 41, 42 may be triangular in a side view such that a height becomes lower continuously, but a downstream end in a conveying direction of the first regulating members 41, 42 is preferably subjected to notch processing.

A shortest distance between a lower surface 211 of the first film-forming member 21 and an upper surface 411 of the first regulating member 41 is preferably short, and more preferably greater than 0 mm and 0.5 mm or less. In response to a distance between both being short, it is possible to suppress the electrode material from entering a gap between the first regulating member and a film-forming member or a current collector foil and an end shape of an electrode becoming unstable.

A shortest distance between a lower surface 412 of the first regulating member 41 and an upper surface 111 of the current collector foil 11 is preferably short, and more preferably greater than 0 mm and 0.5 mm or less. In response to a distance between both being short, it is possible to suppress the electrode material from entering a gap between the first regulating member and a film-forming member or a current collector foil and an end shape of an electrode becoming unstable.

A shortest distance between a downstream end 41a in a conveying direction of the current collector foil 11 in the first regulating member 41 and a downstream end 21a in a conveying direction of the current collector foil 11 in the first film-forming member 21 is preferably short, and more preferably greater than 0 mm and 5 mm or less. In response to a distance between both being short, it is possible to suppress an end shape of an electrode from becoming unstable due to the electrode material adhering to an end of the first regulating member.

A thickness of an electrode material film in a molded body for an electrode is preferably 100 µm to 1000 µm, and more preferably 200 µm to 600 µm. A thickness of an electrode material film is an arithmetic average of thicknesses at arbitrary three locations measured by cross-sectional observation. A known microscope (for example, a scanning electron microscope) can be used for cross-sectional observation.

A method for manufacturing an electrode molded body according to the present disclosure may include other steps other than the above.

Examples of other steps include a step of pressurizing an electrode material film.

### (Step of Pressurizing Electrode Material Film)

A method for manufacturing a molded body for an electrode according to the present disclosure may have a step of pressurizing an electrode material film obtained in the above-described step.

In response to a method for manufacturing a molded body for an electrode according to the present disclosure including a pressurizing step, a density of an electrode material can be increased, and in-plane uniformity of density and thickness can be achieved.

Examples of a pressurizing means to be used in this step include a pair of pressurizing rolls and a press machine.

In response to pressurizing an electrode material film, a pressure is preferably 0.01 MPa to 100 MPa, more preferably 0.1 MPa to 50 MPa, and particularly preferably 0.2 MPa to 10 MPa.

In this step, an electrode material film may be pressurized stepwise using a plurality of pressurizing means (for example, a pair of pressurizing rolls). By pressurizing an electrode material film stepwise using a plurality of pressurizing means, a density and a thickness of an electrode material can be made more uniform.

For example, an electrode material film can be pressurized stepwise by using a plurality of pairs of pressurizing rolls in which a gap between rolls is adjusted to be narrower stepwise.

In this step, it is preferable to perform by relatively moving a pressurizing means and an electrode material film (specifically, a support on which an electrode material film is formed).

In the present disclosure, "relatively moving a pressurizing means and an electrode material film" includes moving a pressurizing means in one direction with respect to an electrode material film, moving an electrode material film in one direction with respect to a pressurizing means, and moving a pressurizing means and an electrode material film in one direction, respectively, but it is preferable to move an electrode material film in one direction with respect to a pressurizing means.

A means for moving an electrode material film (specifically, a support on which an electrode material film is formed) is not limited, and a known conveying means can be used, and examples thereof include a belt conveyor, a linear motion guide, and a cross roller table.

In this step, from a viewpoint of improving moldability, for example, an electrode material film heated at 30°C to 100°C may be pressurized.

A molded body for an electrode obtained by a method for manufacturing a molded body for an electrode according to the present disclosure is excellent in in-plane uniformity of thickness, and therefore can be used as various electrodes.

A molded body for an electrode is preferably a molded body for an electrode of an all-solid-state secondary battery.

An average thickness of a molded body for an electrode is preferably 0.01 mm to 2 mm, more preferably 0.05 mm to 1.5 mm, and particularly preferably 0.1 mm to 1 mm from a viewpoint of improving battery performance (for example, discharge capacity and output characteristics).

An average thickness of a molded body for an electrode is measured by a method similar to an average thickness of a current collector foil.

### EXAMPLES

Hereinafter, the present disclosure will be described more specifically by examples. However, the present disclosure is not limited to the following examples as long as it does not exceed a gist thereof.

### <Examples 1 to 3, Comparative Examples 1 to 5>

In response to mixing a mixed liquid obtained by mixing ethylene carbonate, propylene carbonate, and diethyl carbonate with LiPF₆ as an electrolyte, and further mixing vinylene carbonate, 64 g of the obtained mixed liquid was taken out, and this was used as an electrolytic solution X1.

2 g of ketjen black as a conductive auxiliary agent and 174 g of lithium iron phosphate as a positive electrode active material were stirred at 1500 rpm (revolutions per minute) for 30 seconds using a mixer (Awatori Nertaro ARE-310, manufactured by Thinky Corporation) to prepare a kneaded product Y1 (176 g).

64 g of the electrolytic solution X1 was added to 176 g of the kneaded product Y1, and stirred at 1500 rpm for 120 seconds using a mixer (Awatori Nertaro ARE-310, manufactured by Thinky Corporation) to obtain a positive electrode material P1.

A volume ratio of a solid component and a liquid component of the obtained positive electrode material P1 was 48:52.

As shown in FIGS. 1 and 2, two film-forming members (a first film-forming member and a second film-forming member) were arranged, and the positive electrode material P1 was supplied onto a current collector foil to manufacture a molded body for an electrode. Widths, vibration frequencies, and vibration amplitudes of the first film-forming member and the second film-forming member were adjusted to values described in Table 1.

Also, a first regulating member configured to regulate a width of a first electrode material film was provided between the first film-forming member and the current collector foil. The first regulating member is not in contact with the first film-forming member and the current collector foil.

A shortest distance between a lower surface of the first film-forming member and an upper surface of the first regulating member was 0.1 mm.

A shortest distance between a lower surface of the first regulating member and an upper surface of the current collector foil was 0.3 mm.

A shortest distance between a downstream end in a conveying direction of the current collector foil in the first regulating member and a downstream end in a conveying direction of the current collector foil in the first film-forming member was 2 mm.

An electrode material supplied onto a current collector foil was leveled using a first film-forming member to form a first electrode material film so that a width W1 and a thickness H1 had values described in Table 1.

The first electrode material film was leveled using a second film-forming member to form a second electrode material film so that a width W2 and a thickness H2 had values described in Table 1.

In a molded body for an electrode obtained, evaluation was performed on whether or not a second electrode material film was formed on a current collector foil without excess or deficiency. Specifically, evaluation was performed based on a distance between an end portion in a width direction of a second electrode material film and an end portion in a width direction of a current collector foil. Evaluation criteria are as follows. "A" is a level with no practical problem.

A: An average value of a distance between an end portion in a width direction of a second electrode material film and an end portion in a width direction of a current collector foil is within 1 mm.

B1: A width of a second electrode material film is shorter than a width of a current collector foil, and an average value of a distance between an end portion in a width direction of a second electrode material film and an end portion in a width direction of a current collector foil is greater than 1 mm.

B2: A width of a second electrode material film is longer than a width of a current collector foil, and an average value of a distance between an end portion in a width direction of a second electrode material film and an end portion in a width direction of a current collector foil is greater than 1 mm.

**[Table 1]**

| | first film-forming member | | | second film-forming member | | | first electrode material film | | second electrode material film | | W1/W2 | H2/H1 | Wh2/Wh1 | evaluation |
|---|---|---|---|---|---|---|---|---|---|---|---|---|---|---|
| | width WN1 [mm] | vibration frequency [kHz] | vibration amplitude Wh1 [µm] | width WN2 [mm] | vibration frequency [kHz] | vibration amplitude Wh2 [µm] | width W1 [mm] | thickness H1 [mm] | width W2 [mm] | thickness H2 [mm] | | | | |
| Example 1 | 196 | 20 | 40 | 204 | 20 | 40 | 194 | 0.5 | 204 | 0.4 | 0.95 | 0.80 | 1.00 | A |
| Example 2 | 196 | 20 | 40 | 204 | 20 | 40 | 178 | 1 | 204 | 0.4 | 0.87 | 0.40 | 1.00 | A |
| Example 3 | 196 | 70 | 11 | 204 | 70 | 11 | 194 | 0.5 | 204 | 0.4 | 0.95 | 0.80 | 1.00 | A |
| Comparative Example 1 | 196 | 20 | 40 | 204 | 20 | 40 | 174 | 0.5 | 204 | 0.4 | 0.85 | 0.80 | 1.00 | B1 |
| Comparative Example 2 | 196 | 20 | 40 | 204 | 20 | 40 | 202 | 0.5 | 204 | 0.4 | 0.99 | 0.80 | 1.00 | B2 |
| Comparative Example 3 | 196 | 20 | 40 | 204 | 20 | 40 | 178 | 1.4 | 204 | 0.4 | 0.87 | 0.29 | 1.00 | B2 |
| Comparative Example 4 | 196 | 20 | 40 | 204 | 20 | 40 | 156 | 1 | 204 | 0.4 | 0.76 | 0.40 | 1.00 | B1 |
| Comparative Example 5 | 196 | 20 | 40 | 204 | 20 | 40 | 194 | 0.42 | 204 | 0.4 | 0.95 | 0.95 | 1.00 | B1 |

In Examples 1 and 2, in response to W1/W2 being greater than 0.86 and less than 0.96, and H2/H1 being greater than 0.3 and less than 0.9, it was found that an electrode material film was formed with an appropriate width relative to a width of a current collector foil.

In Comparative Example 1 and Comparative Example 4, in response to W1/W2 being 0.86 or less, an electrode material film was not sufficiently formed on a current collector foil.

In Comparative Example 2, in response to W1/W2 being 0.96 or more, protrusion of an electrode material film from a current collector foil was large.

In Comparative Example 3, in response to H2/H1 being 0.3 or less, protrusion of an electrode material film from a current collector foil was large.

In Comparative Example 5, in response to H2/H1 being 0.9 or more, an electrode material film was not sufficiently formed on a current collector foil.

### <Example 100>

In Example 100, a molded body for an electrode was manufactured by supplying the positive electrode material P1 onto a current collector foil in a manner similar to Example 2, except that a third film-forming member was further arranged.

Widths, vibration frequencies, and vibration amplitudes of the first film-forming member and the second film-forming member were adjusted to the same values as in Example 2.

A width of the third film-forming member was adjusted to 208 mm, a vibration frequency of the third film-forming member was adjusted to 0.3 kHz, and a vibration amplitude of the third film-forming member was adjusted to 1 µm.

An electrode material supplied onto a current collector foil was leveled using a first film-forming member to form a first electrode material film so that a width W1 and a thickness H1 had the same values as in Example 2.

The first electrode material film was leveled using a second film-forming member to form a second electrode material film so that a width W2 and a thickness H2 had the same values as in Example 2.

The second electrode material film was leveled using a third film-forming member to form a third electrode material film so that a width W3 and a thickness H3 were the same as a width W2 and a thickness H2 (width: 204 mm, thickness: 0.4 mm).

In a molded body for an electrode obtained, evaluation similar to Example 2 was performed on whether or not a third electrode material film was formed on a current collector foil without excess or deficiency. An evaluation result was A. Furthermore, a surface of the third electrode material film in Example 100 had higher smoothness than a surface of the second electrode material film.

### <Reference Example>

In a reference example, a molded body for an electrode was manufactured by supplying the positive electrode material P1 onto a current collector foil in a manner similar to Example 2, except that only one film-forming member was arranged. A width, a vibration frequency, and a vibration amplitude of one film-forming member were adjusted to the same values as a width, a vibration frequency, and a vibration amplitude of the second film-forming member in Example 2.

In a molded body for an electrode obtained, evaluation similar to Example 2 was performed on whether or not a first electrode material film was formed on a current collector foil without excess or deficiency.

It was found that a portion in which a width of a first electrode material film was shorter than a width of a current collector foil and a portion in which a width of a first electrode material film was longer than a width of a current collector foil were mixed. An evaluation result was both B1 and B2.

The disclosure of Japanese Patent Application No. 2023-218611 filed on December 25, 2023 is incorporated herein by reference in its entirety. In addition, all documents, patent applications, and technical standards described in this specification are incorporated herein by reference to the same extent as if each individual document, patent application, and technical standard were specifically and individually indicated to be incorporated by reference.

## Claims

1. A method for manufacturing a molded body for an electrode, comprising:
a step of transporting a current collector foil;
a step of supplying an electrode material onto the current collector foil, the electrode material including an electrode active material, a conductive auxiliary agent, and an electrolytic solution, and having a solid content concentration of 40 vol% to 70 vol%;
a step of leveling the electrode material supplied onto the current collector foil using a first film-forming member to form a first electrode material film; and
a step of leveling the first electrode material film using a second film-forming member to form a second electrode material film,
wherein, in a case in which a width of the first electrode material film is W1 and a width of the second electrode material film is W2, W1/W2 is more than 0.86 and less than 0.96, and in a case in which a thickness of the first electrode material film is H1 and a thickness of the second electrode material film is H2, H2/H1 is more than 0.3 and less than 0.9.

2. The method for manufacturing a molded body for an electrode according to claim 1, wherein the first film-forming member is vibrated at a frequency of 10 kHz or more and less than 100 kHz.

3. The method for manufacturing a molded body for an electrode according to claim 1 or claim 2, wherein, in a case in which a width of the first film-forming member is WN1 and a width of the second film-forming member is WN2, WN1/WN2 is more than 0.8 and less than 1.

4. The method for manufacturing a molded body for an electrode according to claim 1 or claim 2, wherein a first regulating member configured to regulate the width of the first electrode material film is provided between the first film-forming member and the current collector foil.

5. The method for manufacturing a molded body for an electrode according to claim 4, wherein the first regulating member is not in contact with the first film-forming member and the current collector foil.

6. The method for manufacturing a molded body for an electrode according to claim 4, wherein a downstream end of the first film-forming member in a transport direction of the current collector foil has a shorter distance to the current collector foil than an upstream end in the transport direction of the current collector foil, and the first film-forming member is provided inclined with respect to the current collector foil.

7. The method for manufacturing a molded body for an electrode according to claim 6, wherein the first regulating member has a shape in which a height decreases toward the transport direction of the current collector foil.

8. The method for manufacturing a molded body for an electrode according to claim 7, wherein a shortest distance between a lower surface of the first film-forming member and an upper surface of the first regulating member is more than 0 mm and 0.5 mm or less.

9. The method for manufacturing a molded body for an electrode according to claim 7, wherein a shortest distance between a lower surface of the first regulating member and an upper surface of the current collector foil is more than 0 mm and 0.5 mm or less.

10. The method for manufacturing a molded body for an electrode according to claim 7, wherein a shortest distance between a downstream end of the first regulating member in the transport direction of the current collector foil and a downstream end of the first film-forming member in the transport direction of the current collector foil is more than 0 mm and 5 mm or less.

11. The method for manufacturing a molded body for an electrode according to claim 1 or claim 2, further comprising a step of leveling the second electrode material film using a third film-forming member to form a third electrode material film.

12. The method for manufacturing a molded body for an electrode according to claim 1 or claim 2, wherein a second regulating member configured to regulate the width of the second electrode material film is provided between the second film-forming member and the current collector foil.

13. The method for manufacturing a molded body for an electrode according to claim 1 or claim 2, comprising a step of sequentially leveling the electrode material supplied onto the current collector foil using N film-forming members (where N is 2 or more) to form an electrode material film,
wherein, in a case in which a vibration frequency of an (N-1)th film-forming member is Hz N-1 and a vibration frequency of an Nth film-forming member is Hz N, Hz N/Hz N-1 is 0.001 to 0.1.

14. The method for manufacturing a molded body for an electrode according to claim 1 or claim 2, comprising a step of sequentially leveling the electrode material supplied onto the current collector foil using N film-forming members (where N is 2 or more) to form an electrode material film,
wherein, in a case in which a vibration amplitude of an (N-1)th film-forming member is Wh N-1 and a vibration amplitude of an Nth film-forming member is Wh N, Wh N/Wh N-1 is 0.005 to 0.5.
